# EUROPEAN PATENT APPLICATION

(11) **EP 2 003 805 A2**
(43) Date of publication of application: **17.12.2008**
(21) Application number: 08251950.5
(22) Date of filing: 05.06.2008
(51) Int. Cl.: H04J 14/02

(54) **Wavelength multiplex transmission apparatus, control method and control program**

(30) Priority: 11.06.2007 JP 2007154431
(71) Applicant: NEC Corporation, Minato-ku Tokyo (JP)
(72) Inventor: Sato, Yoshiro, c/o NEC Corporation, Tokyo (JP)
(74) Representative: Robson, Aidan John

(57) **Abstract**

A wavelength multiplex transmission apparatus including a divided wavelength band unit which controls signal light in each of a plurality of divided wavelength bands into which a transmission wavelength band on a transmission path is divided, a light source which is provided in the divided wavelength band unit and outputs dummy light, and a control unit which controls power of a divided band multiplexed light, which is a multiplexed light of the signal light and the dummy light, to have a predetermined level by controlling the power of the dummy light.

## Description

This application is based upon and claims the benefit of priority from Japanese patent application No. 2007-154431, filed on June 11, 2007, the disclosure of which is incorporated herein in its entirety by reference.

### BACKGROUND OF THE INVENTION

### 1. Field of the Invention

The present invention relates to a wavelength multiplex transmission apparatus and, in particular, to a wavelength multiplex transmission apparatus allowing a wavelength to be added thereto, and a control method and a control program in the wavelength multiplex transmission apparatus.

### 2. DESCRIPTION OF THE RELATED ART

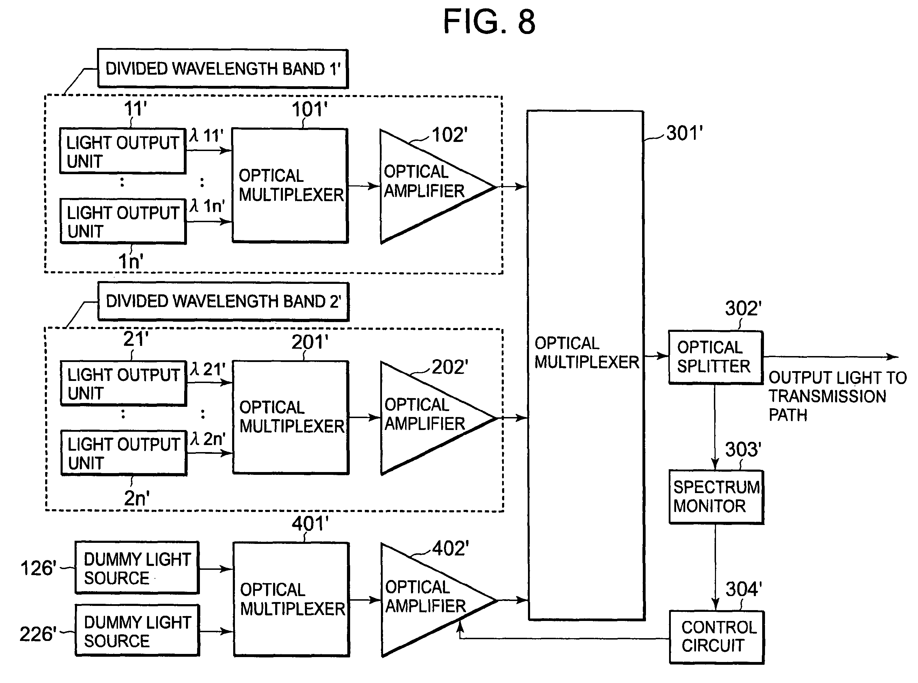

Wavelength multiplex transmission apparatuses which enable transmission of a large amount of information are designed to use wide wavelength bands and allow many wavelengths to be added thereto. Referring to FIG. 8, a wavelength multiplex transmission apparatus related to the present invention will be described below. FIG. 8 shows a configuration of a wavelength multiplex transmission apparatus related to the present invention.

Light output units (11' to 1n', where n is any integer) for wavelength band 1' output signal light of different wavelengths (λ11' to λ1n') to an optical multiplexer (101').

The optical multiplexer (101') multiplexes signal light (λ11' to λ1n') output from the light output units (11' to 1n') and outputs the multiplexed signal light to an optical amplifier (102').

The optical amplifier (102') amplifies the signal light output from the optical multiplexer (101') and outputs the amplified signal light to an optical multiplexer (301').

Wavelength band 2' is the same as wavelength band 1' described above in configuration, except that wavelength band 2' uses a wavelength different from that used in wavelength band 1'.

Dummy light sources (126' , 226') output dummy light of wavelengths different from each other to an optical multiplexer (401'). The optical multiplexer (401') multiplexes the dummy light output from the dummy light sources (126', 226') and outputs the multiplexed dummy light to an optical amplifier (402').

The optical amplifier (402') amplifies the multiplexed dummy light output from the optical multiplexer (401') and outputs the amplified dummy light to the optical multiplexer (301').

The optical multiplexer (301') multiplexes the multiplexed signal light in the divided wavelength band 1', the multiplexed signal light in the divided wavelength band 2', and the multiplexed dummy light together and outputs the multiplexed light to an optical splitter (302').

The optical splitter (302') splits the light output from the optical multiplexer (301') into two and outputs one of the light beams to a transmission path as output light of the apparatus and the other to a spectrum monitor (303') as light for monitoring the signal light and dummy light.

The spectrum monitor (303') detects signal light from the spectral components of the signal light and the dummy light and measures the power of the signal light and the power of the dummy light. The spectrummonitor (303') then converts the measured powers of the signal light and dummy light to electrical signals and outputs the electrical signals to a control circuit (304').

The control circuit (304') calculates a target power of the dummy light on the basis of the information output from the spectrum monitor (303') and feeds back the result of the calculation to an optical amplifier (402'). The control circuit (304') adjusts the power of the dummy light output from the optical amplifier (402') so that the power becomes equal to the calculated target power.

A method for adjusting the power of dummy light is disclosed in Japanese Patent Application Laid-Open No. 2002-198912, for example.

In the method for adjusting dummy light disclosed in Japanese Patent Application Laid-Open No. 2002-198912, spectral components are monitored to measure the power of signal light and the power of dummy light.

In order to monitor spectral components to measure the powers of signal light and dummy light, the wavelengths need to be swept to decompose the power of the signal light into narrow bands. That is, the method has the problem of requiring time to measure the power on the order of seconds because all wavelength bands need to be swept.

DWDM (Dense Wavelength Division Multiplexing) transmission at wavelength spacing of 50 GHz or less is required today. However, the dummy light power adjusting method described above cannot accurately measure the power because of a limited resolution.

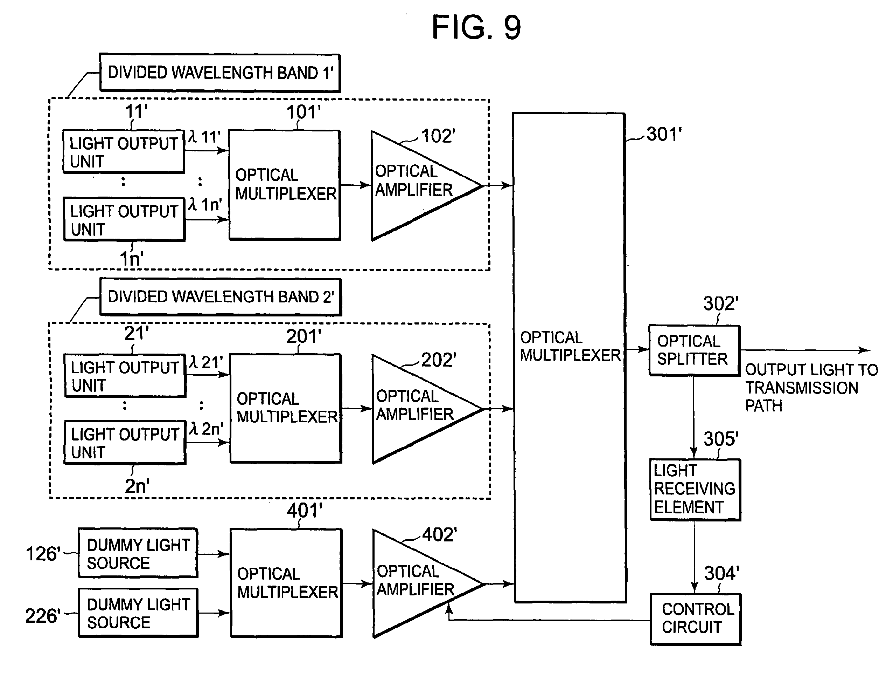

FIG. 9 shows a configuration in which the spectrum monitor (303') shown in FIG. 8 is replaced with a light receiving element (305'). The light receiving element (305') receives the total power of multiplexed light of signal light and dummy light. Accordingly, the problems of measurement time and accuracy of power measurement can be solved.

For example, Japanese Patent Application Laid-Open No. 2002-353939 discloses a method for adjusting the power of dummy light in a case where the spectrum monitor (303') is replaced with a light receiving element (305').

In the dummy light power adjusting method using a light receiving element (305'), signal light and dummy light are multiplexed and the power of the multiplexed light is measured. The powers of all wavelengths of the dummy light are adjusted on the basis of the result of the measurement.

Therefore, when signal light is to be added, the power of all wavelengths of the dummy light provided for that wavelength band of the added signal light are adjusted.

That is, in the dummy light power adjusting method using a light receiving element (305'), the power of multiplexed light of signal light and dummy light can be controlled at a constant level.

However, adjusting method described above has a problem that the powers of each dummy light are adjusted together.

For example, if signal light is added on the shorter wavelength band side, the power of dummy light on the longer wavelength band side is also changed. Consequently, the power is unevenly distributed among multiple optical amplifiers connected on the transmission path side, varying the gain profile.

One of the solutions, it would be effective to evenly add signal light wavelengths from a middle wavelength band. But this solution has still an issue to be solved, that is, when a apparatus that multiplexes divided wavelength bands is used, signal light wavelengths must be added to both shorter and longer wavelength bands at the same time, which is costly.

Japanese Patent Application Laid-Open No. 2005-51596 discloses a technique that facilitates in-service upgrade by allowing good transmission characteristics to be achieved even when less signal light wavelengths than designed are used.

Japanese Patent Application Laid-Open No. 2005-51598 discloses a technique that implements in-service upgrade. In particular, when new signal light is added, the power of the new signal is increased and the power of all dummy light or the power of dummy light adjacent to the sub-band to which the new signal light is added is adjusted in order to prevent the addition of the new light from affecting transmission characteristics of existing signal light.

Japanese Patent Application Laid-Open No. 2006-14055 discloses a technique that, when a service is started by using only a single wavelength band, eliminates the need for a band dispersion compensating unit for other wavelength bands, thereby reducing the initial equipment costs. In particular, means for splitting a wavelength-multiplexed signal is provided in a wavelength multiplexing unit and an optical switch is provided immediately before a band multiplexing unit.

The techniques in Japanese Patent Application Laid-Open Nos. 2005-51596 and 2005-51598 use ASE light as the dummy light and therefore spectral components of the light can be extracted only to a limited degree with a filter or other means. ASE light has an advantage that the total power equivalent to that of CW (Continuous Wave) light having spectral components equivalent to those of signal light can be output with a peak power lower than that of the CW light. However, the ASE light has a drawback that the wavelength of the ASE light overlaps multiple wavelengths of signal light.

Therefore, when signal light is to be added or the wavelengths of signal light and ASE light overlap each other, ASE light in the divided wavelength band of the signal light must be stopped. In this case, if all the signal light wavelengths in the divided wavelength band are added, the total power can be maintained. However, not all the signal light wavelengths in the divided wavelength band are added, the power of the other dummy light must be adjusted. Consequently, the gain profile problem described above will arise.

In Japanese Patent Application Laid-Open No. 2006-14055, no mention is made of a technique in which dummy light sources are provided for multiple divided wavelength bands into which a transmission wavelength band on a transmission path is divided and the power of the dummy light is controlled so that the power of multiplexed light of signal light in the divided wavelength band and the dummy light is held at a constant level, and no suggestion is made of the need for such technique.

The present invention has been made in light of these circumstances and an object of the present invention is to provide a wavelength multiplex transmission apparatus, control method, and control program capable of minimizing variations in a gain profile mentioned above.

### SUMMARY OF THE INVENTION

An exemplary object of the invention is to provide a wavelength multiplex transmission apparatus capable of minimizing variations in gain profile.

An exemplary aspect of the invention includes a wavelength multiplex transmission apparatus in which light source means that outputs dummy light is provided for each divided wavelength band, signal light in the divided wavelength band and the dummy light are multiplexed together, and the power of the dummy light emitted from the light source is controlled so that the power of the multiplexed light is held constant.

### BRIEF DESCRIPTION OF THE DRAWINGS

The above and other objects, features and advantages of the present invention will become more apparent from the following detailed description when taken in conjunction with the accompanying drawings wherein:
FIG. 1 is a block diagram schematically showing a configuration of a wavelength multiplex transmission apparatus in a first embodiment of the present invention;
FIG. 2 is a block diagram schematically showing an internal configuration of a control circuit (105) constituting the wavelength multiplex transmission apparatus in the first embodiment of the present invention;
FIG. 3 is a block diagram schematically showing an internal configuration of a dummy light source (106) constituting the wavelength multiplex transmission apparatus in the first embodiment of the present invention;
FIG. 4 is a first schematic diagram illustrating an example of operation performed by the wavelength multiplex transmission apparatus in the first embodiment of the present invention;
FIG. 5 is a second schematic diagram illustrating an example of operation performed by the wavelength multiplex transmission apparatus in the first embodiment of the present invention;
FIG. 6 is a third schematic diagram illustrating an exemplary operation performed by the wavelength multiplex transmission apparatus in the first embodiment of the present invention;
FIG. 7 is a fourth schematic diagram illustrating an example of operation performed by the wavelength multiplex transmission apparatus in the first embodiment of the present invention;
FIG. 8 is a first block diagram schematically showing a configuration of a wavelength multiplex transmission apparatus related to the present invention; and
FIG. 9 is a second block diagram schematically showing a configuration of a wavelength multiplex transmission apparatus related to the present invention.

### DETAILED DESCRIPTION OF THE EXEMPLARY EMBODIMENTS

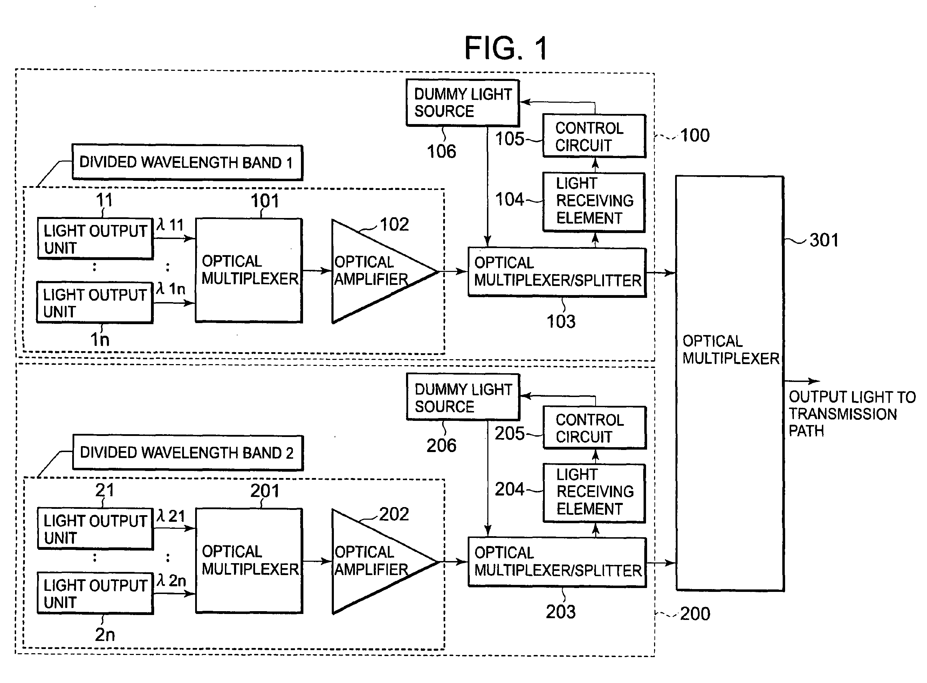

An overview of a wavelength multiplex transmission apparatus according to an embodiment of the present invention will be described below with reference to FIG. 1.

The wavelength multiplex transmission apparatus according to the present embodiment divides a transmission wavelength band on a transmission path, that is, an entire wavelength band that transmits signal light into multiple divided wavelength bands (for example divided wavelength bands 1 and 2) and transmits signal light using each of the divided wavelength bands (divided wavelength bands 1 and 2) as a transmission unit.

A dummy light source (106, 206) that outputs dummy light is provided for each of the divided wavelength bands (divided wavelength bands 1 and 2). The power of dummy light output from the dummy light source (106), for example, is controlled so that the power of divided band multiplexed light resulting from multiplexing of signal light in a divided wavelength band (divided wavelength band 1) and the dummy light is held at a constant level. The same control is performed for the divided wavelength band 2.

This configuration facilitates adjustment of the power of dummy light output from the dummy light source (106, 206) when a wavelength is added. Accordingly, variations in the total output power of the divided wavelength bands (divided wavelength bands 1 and 2) can be minimized. As a result, variations in total output power of all the wavelength bands can be minimized.

Furthermore, because the power of the dummy light output from the dummy light source (106, 206) of the divided wavelength bands (divided wavelength bands 1 and 2) can be individually adjusted, the power is evenly distributed among all the wavelength bands and variations in gain profile can be minimized. As a result, a wavelength can be added to any of the divided wavelength bands. The wavelength multiplex transmission apparatus in the present embodiment will be described below in detail with reference to the accompanying drawings.

### Configuration of the wavelength multiplex transmission apparatus

The wavelength multiplex transmission apparatus shown in FIG. 1 is one exemplary embodiment (first exemplary embodiment) of the wavelength multiplex transmission apparatus in the present embodiment.

The wavelength multiplex transmission apparatus of the exemplary embodiment includes a divided wavelength band unit 1 (100) which generates light in the divided wavelength band 1, a divided wavelength band unit 2 (200) which generates light in the divided wavelength band 2, and an optical multiplexer (301) which multiplexes light in the divided wavelength band 1 and light in the divided wavelength band 2 and outputs the multiplexed light (referred to as transmission band multiplexed light) as apparatus output light to a transmission path.

In this way, the wavelength multiplex transmission apparatus in the present exemplary embodiment divides a transmission wavelength band on a transmission path into multiple divided wavelength bands (divided wavelength bands 1 and 2). Then, the divided wavelength bands are wavelength-multiplexed, thereby offering the advantages of reducing initial costs and allowing dispersion compensation of the divided wavelength bands to be collectively made.

The divided wavelength band unit 1 (100) includes multiple light output units (11 to 1n), an optical multiplexer (101), an optical amplifier (102), an optical multiplexer/splitter (103), a light receiving element (104), a control circuit (105), and a dummy light source (106).

The light output units (11 to 1n) output signal light of different wavelengths (λ11 to λ1n) to the optical multiplexer (101).

The optical multiplexer (101) multiplexes signal light (λ11' to λ1n) coming from the light output units (11 to 1n) and outputs the multiplexed signal light to the optical amplifier (102).

The optical amplifier (102) amplifies the signal light coming from the optical multiplexer (101) and outputs the amplified signal light to the optical multiplexer/splitter (103). Here, it is assumed that the gain of the optical amplifier (102) in this exemplary embodiment does not vary depending on the wavelength of signal light.

The dummy light source (106) outputs a single CW light beam (unmodulated laser light) on a wavelength grid of the signal light of the light output units (11 to 1n) as dummy light.

The optical multiplexer/splitter (103) multiplexes wavelength multiplexed signal light in the divided wavelength band 1 coming from the optical amplifier (102) and dummy light coming from the dummy light source (106) and splits the multiplexed light (referred to as divided band multiplexed light) into two. Then, the optical multiplexer/splitter (103) outputs one of the split light to an optical multiplexer (301) and the other to a light receiving element (104). The light output to the light receiving element (104) is used for monitoring the powers of signal light and dummy light.

The light receiving element (104) converts the light output from the optical multiplexer/splitter (103) to an electrical signal and outputs the electrical signal to the control circuit (105).

The control circuit (105) feedback-controls the dummy light source (106) on the basis of the electrical signal output from the light receiving element (104). The control circuit (105) controls the output power of the dummy light output from the dummy light source (106) so that the current level of the electrical signal output from the light receiving element (104) is held constant.

This configuration enables the control circuit (105) to monitor the power of multiplexed light of wavelength-multiplexed signal light in the divided wavelength band 1 and dummy light from the dummy light source (106), on the basis of the electrical signal output from the light receiving element (104). This configuration also enables the power of dummy light output from the dummy light source (106) to be controlled so that the power of the monitored multiplexed light is held at a constant level.

In this way, in the wavelength multiplex transmission apparatus in the present exemplary embodiment, multiple light output units (11 to 1n) that output signal light and a dummy light source (106) that outputs single CW light (unmodulated laser light) on the wavelength grid of the signal light are provided in the divided wavelength band unit 1 (100). If there is no light output unit (11 to 1n) installed to the divided wavelength band 1, the dummy light source (106) outputs dummy light with high power, the power equals to the total power of the signal light at all of light units (11 to 1n) are installed thereto. Each time a light output unit (11 to 1n) is added to the divided wavelength band 1, the power of dummy light output from the dummy light source (106) is reduced, thereby controlling the total power output from the divided wavelength band (divided wavelength band 1) so that the total power is held at a constant level.

The divided wavelength band unit 2 (200) is configured in the same way as the divided wavelength band unit 1 (100). The only difference is that the wavelength used in the divided wavelength band unit 2 differs from the wavelength used in the divided wavelength band unit 1. The divided wavelength band unit 2 also performs the same control as the divided wavelength band unit 1 described above.

### Configuration of the control circuit 105

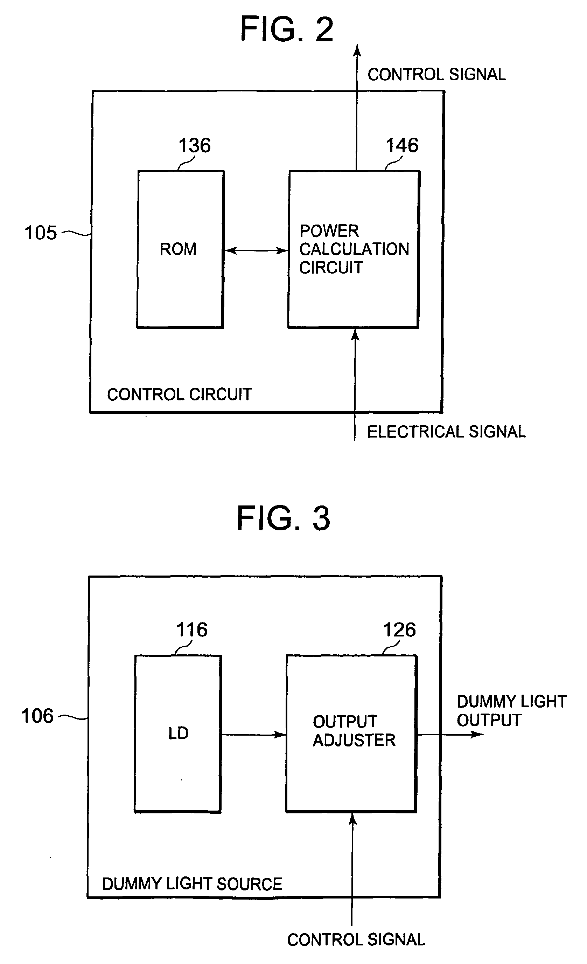

A configuration of the control circuit (105) of the present embodiment will be described with reference to FIG. 2. The control circuit (105) shown in FIG. 2 is one exemplary embodiment (first exemplary embodiment) of the control circuit (105) of the present embodiment.

The control circuit (105) in the present exemplary embodiment includes a memory (136) and a power calculation circuit (146).

The memory (136) stores information corresponding to the total power of the divided wavelength band unit 1 (100).

The power calculation circuit (146) measures the power of multiplexed light of wavelength-multiplexed signal light in the divided wavelength band 1 and dummy light according to an electrical signal output from the light receiving element (104).

Based on the measurement result, the power calculation circuit (146) outputs to the dummy light source (106) a control signal for controlling the power of dummy light output from the dummy light source (106) so that the current level of the electrical signal output from the light receiving element (104) is held constant.

A method for determining the power of the dummy light output from the dummy light source (106) in the initial state in which no light output unit (11 to 1n) is added for the divided wavelength band 1 will be described below. The power equivalent to the insertion loss of the optical multiplexer/splitter (103) is added to the power of the dummy light measured on the basis of the electrical signal output from the light receiving element (104). This allows the output power of the dummy light output from the dummy light source (106) in the initial state to be determined. The power of the dummy light in the initial state is stored in the memory (136). When a light output unit (11 to 1n) is subsequently added to divided wavelength band 1, the information stored in the memory (136) will be referenced as a target level of the power of signal light output from the optical amplifier (102).

### Configuration of the dummy light source 106

Referring to FIG. 3, a configuration of the dummy light source (106) according to the present embodiment will be described next. FIG. 3 shows one exemplary embodiment (first exemplary embodiment) of the configuration of the dummy light source (106) in the present embodiment.

The dummy light source (106) in the present exemplary embodiment includes an LD (116) and an output adjuster (126).

The LD (116) outputs CW light (unmodulated laser light) of one of wavelengths (λ11' to λ1n) as dummy light.

The output adjuster (126) adjusts the power of the dummy light output from the LD (116). In particular, the output adjuster (126) adjusts the power of the dummy light output from the LD (116) according to a control signal output from the control circuit (105). The output adjuster (126) in the present exemplary embodiment represents an optical amplifier or an optical variable attenuator.

The configuration of the dummy light source (206) in the present exemplary embodiment is the same as that of the dummy light source (106) except that the dummy light source (206) uses a wavelength different from that used in the dummy light source (106).

### Operation in the wavelength multiplex transmission apparatus

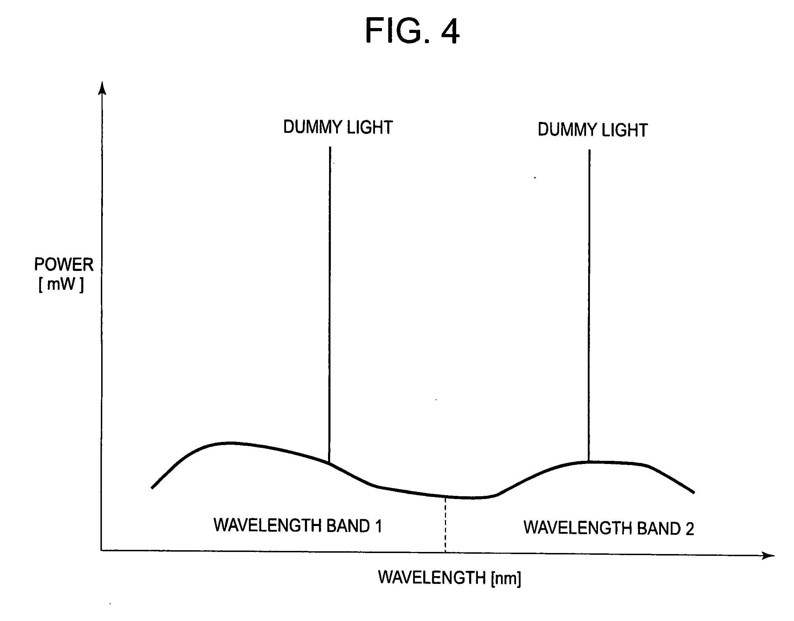

Referring to FIGS. 4 to 7, one exemplary embodiment (first exemplary embodiment) of a process performed in the wavelength multiplex transmission apparatus according to the present embodiment will be described below. FIGS. 4 to 7 schematically show spectra output from the apparatus when a wavelength is added. The horizontal axis represents wavelength (nm) and the vertical axis represents power (mW).

In the model in the exemplary embodiment, the maximum number of wavelengths in each of divided wavelength bands 1 and 2 is 8 and a total of 16 wavelengths can be provided. FIG. 4 shows an initial configuration in which wavelengths are not added to the divided wavelength bands 1 and 2. Only dummy light is provided in the optical multiplexer/splitter (103).

Each dummy light output power of the divided wave length bands 1 and 2 at initial configuration shown in FIG. 4 are set as targets for controlling total output power of signal light and dummy light. That is, the control circuit (105) performs feedback-control of the dummy light source (106) so that the power of multiplexed light of signal light and dummy light becomes equal to the target value.

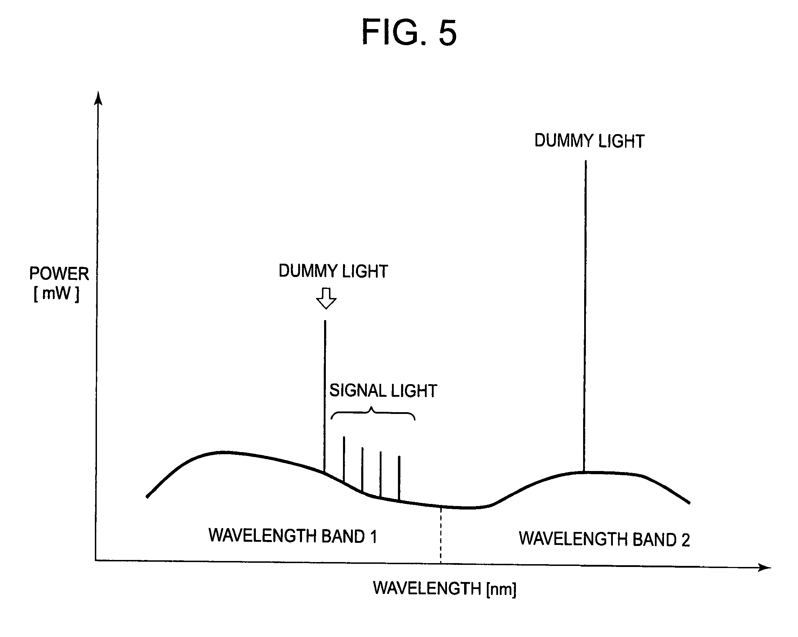

FIG. 5 shows a state in which four wavelengths are added to the divided wavelength band 1. In this state, the target value of the power output from the optical amplifier (102) is one half of the output power of dummy light determined in the initial configuration shown in FIG. 4.

For example, when the first wavelength is added, the output of the light output unit (11) is adjusted so that the power of the signal light output from the optical amplifier (102) becomes 1/8 of the power of the dummy light determined in the initial configuration. When the second wavelength is added, the outputs of the light output units (11 and 12) are adjusted so that the power of the signal light output from the optical amplifier (102) becomes 1/4 of the power of the dummy light determined in the initial configuration.

Similarly, when the third wavelength is added, the outputs of the light output units (11 to 13) are adjusted so that the power of the signal light output from the optical amplifier (102) becomes 3/8 of the power of the dummy light determined in the initial configuration. When the fourth wavelength is added, the outputs from the light output units (11 to 14) are adjusted so that the power of the signal light output from the optical amplifier (102) becomes 1/2 of the power of the dummy light determined in the initial configuration.

The adjustment of the outputs from the light output units (11 to 1n) is performed as follows. First, the control circuit (105) monitors the power of signal light from the optical amplifier (102). Then, the control circuit (105) performs feedback-control to the power of signal light output from the light output units (11 to 1n) so that the monitored power satisfies the conditions given above. As described above, the control circuit (105) performs automatically adjustment of the outputs of the light output units (11 to 1n).

Another configuration is also possible in which the outputs from the light output units (11 to 1n) are manually adjusted so that the power of signal light from the optical amplifier (102) satisfies the conditions given above.

Because four wavelengths out of the maximum of eight have been added In FIG. 5, the o utput power of the dummy light becomes one half of the power of the dummy light determined in the initial configuration. The power of the dummy light in the divided wavelength band 2 does not change.

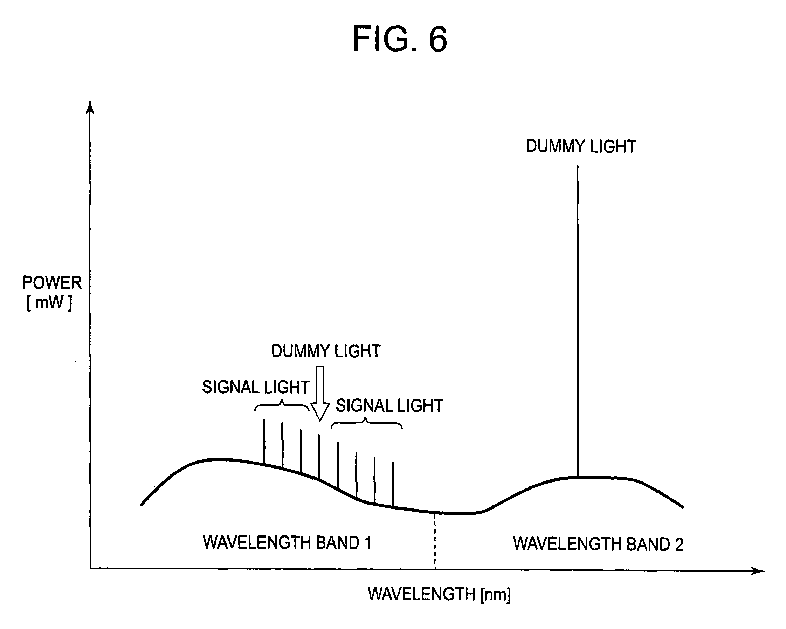

FIG. 6 shows a state in which seven wavelengths have been added to the divided wavelength band 1. The wavelengths are added in the same manner as in FIG. 5.

In FIG. 6, seven wavelengths out of the maximum of eight is added so that the power of the dummy light is 1/8 of the power of the dummy light determined in the initial configuration. The power of the dummy light in the divided wavelength band 2 does not change.

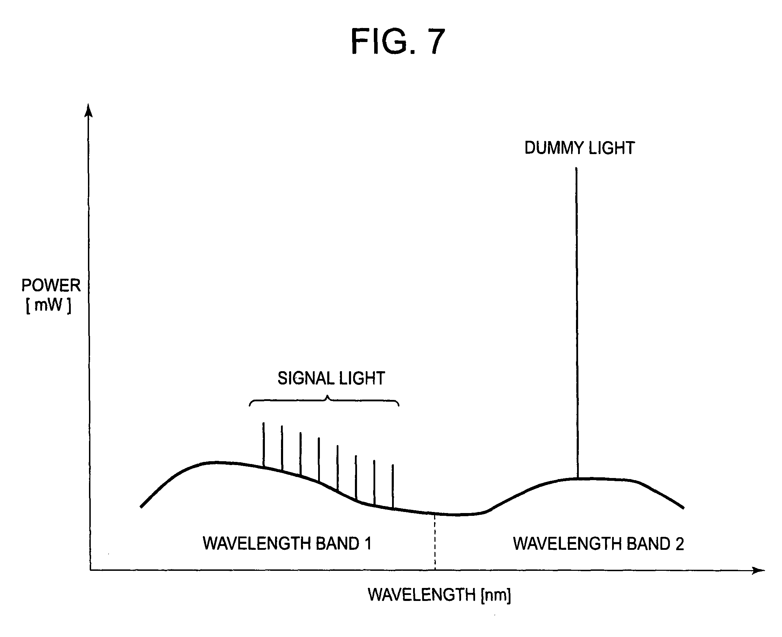

FIG. 7 shows a state in which eight wavelengths have been added to the divided wavelength band 1.

When the eighth wavelength is added to the divided wavelength band 1, the eighth wavelength will be equal to that of the dummy light. Therefore, the output of the dummy light is stopped before the eighth wavelength is added to the divided wavelength band 1.

When the dummy light source stop to output he dummy light, the total power of output from the divided wavelength band unit 1 (100) decreases by the stopped output power of the dummy light. However, the decrease is 1/8 of the total power of the output from the divided wavelength band unit 1 (100) and 1/16 of the total power of the output from the entire apparatus, which is trivial.

Typically, system design includes a variation margin. Accordingly, stopping the output of the dummy light does not affect the quality of signals.

Therefore; the eighth wavelength can be added to the divided wavelength band 1 after the output of the dummy light is stopped as described above. During the addition, the power of the dummy light in the divided wavelength band 2 does not change.

As has been described, in the wavelength multiplex transmission apparatus in the present exemplary embodiment, dummy light sources (106, 206), each emitting single CW light on a wavelength grid of signal light in each divided wavelength band (divided wavelength band 1, 2) as dummy light, are provided for the divided wavelength bands (divided wavelength bands 1 and 2). The power of the dummy light output from the dummy light source (106, 206) is feedback-controlled so that the total power of the multiplexed light of the signal light in the divided wavelength bands (divided wavelength bands 1 and 2) and the dummy light output from the dummy light source (106, 206) is held at a constant level.

Thus, the wavelength multiplex transmission apparatus in the present exemplary embodiment can readily adjust the power of dummy light output from the dummy light source (106, 206) when a wavelength is added. Furthermore, variations in the total power output in the divided wavelength bands can be minimized. Consequently, variations in the total power output in all wavelength bands can be minimized.

Since the wavelength multiplex transmission apparatus in the present exemplary embodiment adjusts the power of CW light output from the dummy light source (106, 206) for each divided wavelength band (divided wavelength band 1, 2), the power is evenly distributed among all wavelength bands and therefore variations in gain profile can be minimized.
Consequently, a wavelength can be added in any wavelength band.

### Second exemplary embodiment

Another exemplary embodiment (second exemplary embodiment) of the present embodiment will be described below.

A wavelength multiplex transmission apparatus in the second exemplary embodiment performs control such that, when the eighth wavelength is added to a divided wavelength band 1, the power of signal light of the eighth wavelength added to the divided wavelength band 1 gradually increases without the need to stop the dummy light.

Then, by the feedback control of the control circuit (105) described in the first exemplary embodiment, the power of dummy light output from a dummy light source (106) gradually decreases as the power of the signal light of the eighth wavelength increases. That is, the eighth wavelength can be added to the divided wavelength band 1 without stopping the output of the dummy light. Consequently, the eighth wavelength can be added to the divided wavelength band 1 without changing the total power of the output of the divided wavelength band unit 1 (100).

In the second exemplary embodiment, control is performed to stop the output of the dummy light when the total power of the output from the divided wavelength band unit 1 (100) reaches a specified output.

The exemplary embodiments described above are preferred embodiment of the present invention. The scope of the present invention is not limited to the exemplary embodiments described above. Those skilled in the art can made modification or substitutions to the exemplary embodiments described above without departing from the spirit and scope of the present invention to implement variations of the exemplary embodiments.

For example, a modulation signal may be provided to the dummy light source (106) and the dummy light source (106) may be used as a signal light source.

As another example, a modulation signal is provided to the dummy light source (106) and the dummy light source may be used when adding a wavelength to the divided wavelength band 2. This is because the dummy light source (106) is no longer needed after the eighth wavelength is added to wavelength band 1.

Control operations of the apparatuses constituting the wavelength multiplex transmission apparatus in any of the exemplary embodiments described above may be implemented by hardware or software or a combination of both.

If the control process is implemented by software, a program in which a sequence of the process is contained may be installed in a memory in a computer included in dedicated hardware and the hardware may be caused to perform the process sequence. Alternatively, a program in which a sequence of the process is contained may be installed in a general-purpose computer capable of performing various kinds of processing and may cause the computer to perform the process sequence.

For example, the program may be recorded on a recording medium such as a hard disk or a ROM (Read Only Memory) beforehand. Alternatively, the program may be temporarily or permanently stored in a removable recording medium such as a floppy ® disk, CD-ROM (Compact Disc Read Only Memory), MO (Magneto Optical) disk, DVD (Digital Versatile Disc), magnetic disk, or semiconductor memory. Such a removable recording medium can be provided as so-called package software.

The program may be transferred from a download site to a computer by radio or wire through a network such as a LAN (Local Area Network) or the Internet. Then the program may be received by the computer and installed in a recording medium such as an internal hard disk.

The processing according to the present invention does not necessarily need to be performed in time sequence in accordance with the process steps described with respect to the exemplary embodiments described above. Depending on the throughput of the apparatus that performs the process or other requirements, the process may be built so that the process steps are performed in parallel or individually.

The wavelength multiplex transmission apparatus may be implemented as a logical set of multiple apparatuses, or apparatuses constituting each configuration may be provided in a single housing.

While this invention has been described in connection with certain exemplary embodiments, it is to be understood that the subject matter encompassed by way of this invention is not to be limited to those specific embodiments. On the contrary, it is intended for the subject matter of the invention to include all alternatives, modifications and equivalents as can be included within the spirit and scope of the following claims.

Further, it is the inventor's intent to retain all equivalents of the claimed invention even if the claims are amended during prosecution.

An example 1 describes a wavelength multiplex transmission apparatus comprising a divided wavelength band unit which controls signal light in divided wavelength band into which a transmission wavelength band on a transmission path is divided, a light source which is provided in the divided wavelength band unit and outputs dummy light, and a control unit which controls power of a divided band multiplexed light, which is multiplexed light of the signal light and the dummy light, to have predetermined level by controlling the power of dummy light.

An example 2 describes the wavelength multiplex transmission apparatus according to example 1, wherein the control unit monitors the divided band multiplexed light.

An example 3 describes the wavelength multiplex transmission apparatus according to example 1 or 2, wherein the control unit is in the divided wavelength band unit.

An example 4 describes the wavelength multiplex transmission apparatus according to example 1, 2 or 3, comprising an optical multiplexer which further multiplexes the divided band multiplexed light in the plurality of divided wavelength bands into a transmission band multiplexed light and outputs the transmission band multiplexed light.

An example 5 describes the wavelength multiplex transmission apparatus according to example 4, further comprising an optical splitter which splits the divided band multiplexed light into two light beams and outputs one of the light beams to the control unit and the other to the optical multiplexer.

An example 6 describes the wavelength multiplex transmission apparatus according to any one of example 1 to example 5, wherein the dummy light is a single unmodulated laser light beam on a wavelength grid of signal light in the divided wavelength band.

An example 7 describes the wavelength multiplex transmission apparatus according to any one of example 1 to example 6, wherein the divided wavelength band unit outputs multiplexed signal light into which a plurality of signal light wavelengths are multiplexed.

An example 8 describes the wavelength multiplex transmission apparatus according to any one of example 1 to example 7, wherein the control unit stops the dummy light when an added wavelength of signal light which is added to the divided wavelength band unit is equal to a wavelength of the dummy light.

An example 9 describes the wavelength multiplex transmission apparatus according to any one of example 1 to example 8, wherein the control unit performs so that the power of the signal light to be added increases when an added wavelength of signal light which is added to the divided wavelength band unit is equal to a wavelength of the dummy light.

An example 10 describes the wavelength multiplex transmission apparatus according to example 9, wherein the control unit stop the dummy light when the power of the added wavelength of signal light reaches a predetermined level.

An example 11 describes a control method comprising the steps of dividing a transmission wavelength band on a transmission path into a plurality of divided wavelength bands, outputting a dummy light from a light source provided in the divided wavelength band, and controlling power of a divided band multiplexed light, which is multiplexed light of the signal light and the dummy light, to have predetermined level by controlling the power of dummy light.

An example 12 describes the control method according to example 11, further comprising the steps of monitoring power of the divided band multiplexed light.

An example 13 describes the control method according to example 11 or 12, further comprising the steps of multiplexing the divided band multiplexed light in the divided wavelength bands into a transmission band multiplexed light, and outputting the transmission band multiplexed light.

An example 14 describes a control program causing the wavelength multiplex transmission apparatus to perform the steps of dividing a transmission wavelength band on a transmission path into a plurality of divided wavelength bands, providing light source means for outputting dummy light for the divided wavelength bands, and controlling power of a divided band multiplexed light, which is multiplexed light of the signal light and the dummy light, to have predetermined level by controlling the power of dummy light.

An example 15 describes the control program according to example 14, causing the wavelength multiplex transmission apparatus to perform the steps of monitoring power of divided band multiplexed light resulting from multiplexing signal light in the divided wavelength band and the dummy light. An example 16 describes the control program according to example 14 or 15, causing the wavelength multiplex transmission apparatus to perform the steps of multiplexing the divided band multiplexed light in the divided wavelength bands into a transmission band multiplexed light, and outputting the transmission band multiplexed light.

## Claims

1. A wavelength multiplex transmission apparatus comprising:
a divided wavelength band unit which controls signal light in divided wavelength band into which a transmission wavelength band on a transmission path is divided;
a light source which is provided in the divided wavelength band unit and outputs dummy light; and
a control unit which controls power of a divided band multiplexed light, which is multiplexed light of the signal light and the dummy light, to have predetermined level by controlling the power of dummy light.

2. The wavelength multiplex transmission apparatus according to claim 1, wherein the control unit monitors the divided band multiplexed light.

3. The wavelength multiplex transmission apparatus according to claim 1 or 2, wherein the control unit is in the divided wavelength band unit.

4. The wavelength multiplex transmission apparatus according to claim 1, 2 or 3, comprising an optical multiplexer which further multiplexes the divided band multiplexed light in the plurality of divided wavelength bands into a transmission band multiplexed light and outputs the transmission band multiplexed light.

5. The wavelength multiplex transmission apparatus according to claim 4, further comprising an optical splitter which splits the divided band multiplexed light into two light beams and outputs one of the light beams to the control unit and the other to the optical multiplexer.

6. The wavelength multiplex transmission apparatus according to any one of claim 1 to claim 5, wherein the dummy light is a single unmodulated laser light beam on a wavelength grid of signal light in the divided wavelength band.

7. The wavelength multiplex transmission apparatus according to any one of claim 1 to claim 6, wherein the divided wavelength band unit outputs multiplexed signal light into which a plurality of signal light wavelengths are multiplexed.

8. The wavelength multiplex transmission apparatus according to any one of claim 1 to claim 7, wherein the control unit stops the dummy light when an added wavelength of signal light which is added to the divided wavelength band unit is equal to a wavelength of the dummy light.

9. The wavelength multiplex transmission apparatus according to any one of claim 1 to claim 8, wherein the control unit performs so that the power of the signal light to be added increases when an added wavelength of signal light which is added to the divided wavelength band unit is equal to a wavelength of the dummy light.

10. A control method comprising the steps of:
dividing a transmission wavelength band on a transmission path into a plurality of divided wavelength bands;
outputting a dummy light from a light source provided in the divided wavelength band; and
controlling power of a divided band multiplexed light, which is multiplexed light of the signal light and the dummy light, to have predetermined level by controlling the power of dummy light.

11. The control method according to claim 10, further comprising the steps of monitoring power of the divided band multiplexed light.

12. The control method according to claim 10 or 11, further comprising the steps of:
multiplexing the divided band multiplexed light in the divided wavelength bands into a transmission band multiplexed light; and
outputting the transmission band multiplexed light.

13. A control program causing the wavelength multiplex transmission apparatus to perform the steps of:
dividing a transmission wavelength band on a transmission path into a plurality of divided wavelength bands;
providing light source means for outputting dummy light for the divided wavelength bands; and
controlling power of a divided band multiplexed light, which is multiplexed light of the signal light and the dummy light, to have predetermined level by controlling the power of dummy light.

14. The control program according to claim 13, causing the wavelength multiplex transmission apparatus to perform the steps of:
monitoring power of divided band multiplexed light resulting from multiplexing signal light in the divided wavelength band and the dummy light.

15. The control program according to claim 13 or 14, causing the wavelength multiplex transmission apparatus to perform the steps of:
multiplexing the divided band multiplexed light in the divided wavelength bands into a transmission band multiplexed light; and
outputting the transmission band multiplexed light.
